# EUROPEAN PATENT APPLICATION

(11) **EP 3 242 366 A1**
(43) Date of publication of application: **08.11.2017**
(21) Application number: 16168926.0
(22) Date of filing: 10.05.2016
(51) Int. Cl.: H02H 3/08, H02H 5/12, H02H 11/00, H02H 1/00, H02H 3/04

(54) **A SMART CONTROL SYSTEM FOR DETECTING PLUG-IN OR REMOVAL OF ELECTRICAL DEVICES, DETECTING SHORT CIRCUIT, SENSING HUMAN CONTACT TO THE CONDUCTOR LINE AND PROTECTING HUMAN FROM ELECTRICAL SHOCKS**

(30) Priority: 03.05.2016 TR 201605776
(71) Applicant: Guvenli Elektrik Elektronik Sanayi Ticaret ve Pazarlama Limited Sirketi, 41420 Kocaeli (TR)
(72) Inventor: Gholipour Rashtin, Majid, 34912 Istanbul (TR)
(74) Representative: Yildiz, Ertan

(57) **Abstract**

A smart control system (1) for detecting plug-in or removal of electrical devices, detecting short circuit, sensing human contact to the conductor line and protecting human from electrical shocks, comprising microprocessor (A), switching circuit (B), device detector and short-circuit detecting circuit (C), when main electric is off, device removal and short-circuit detecting circuit (D), when main electric is on, short circuit detecting circuit (E), when main electric is off, human contact detecting circuit (F), when main electric is on, safety circuit (G) for protecting the smart control system (1).

## Description

### Technical Field

The present invention relates to a smart control system for detecting plug-in or removal of electrical devices, detecting short circuit, sensing human contact to the conductor line and protecting human from electrical shocks.

### Background Art

There are various electrical arrangements for protecting human users from electrical shocks in case of human contact to the conductor line in the present time. Some of these prior art circuits depend on a flow of current through the human body before power is interrupted.

As an example of these kind of circuits, an Earth-leakage circuit breaker (ELCB) is a safety device used in electrical installations with high Earth impedance to prevent shock. It detects small stray voltages on the metal enclosures of electrical equipment, and interrupts the circuit if a dangerous voltage is detected. Once widely used, more recent installations instead use residual current circuit breakers which instead detect leakage current directly.

There are two types of ELCB: voltage operated and current operated.

The voltage sensing system has a lot of disadvantages, which include: i) Wire break in the fault to load section or Earth to ground section will results, a failure in operation of ELCB, and user may get severe electric shock, during Earth fault, ii) separate devices cannot be grounded individually, iii) The voltage-operated ELCB are the requirement for a second connection, and the possibility that any additional connection to Earth on the protected system can disable the detector.

The current sensing system has also some disadvantages: i) They do not detect faults that don't pass current through the CPC (circuit protective conductor) to the Earth rod, ii) They do not allow a single building system to be easily split into multiple sections with independent fault protection, because Earthing systems are usually bonded to pipework, iii) They may be tripped by external voltages from something connected to the Earthing system such as metal pipes, iv) Electrically leaky appliances such as some water heaters, washing machines and cookers may cause the ELCB to trip.

Instead of Earth leakage circuit breakers, there are also different electronic arrangements using alternative technologies.

For example, UK Patent Document No GB 2.223.368 A entitled "Electrical safety apparatus" discloses a safety apparatus for protecting users of electricity against exposure to electrical shock. In this system, there is a transmitter and a receiver on opposite sides of the cable to protected. The transmitter produces a high frequency signal. If this signal is not produced or not received, the receiver changes state and cutout C opens. Thus, the hazardous cable is protected from flowing current. The disadvantage of this system is that it is unpractical and cumbersome to install this apparatus throughout the electrical network.

Another technique is disclosed in UK Patent No 1.224.381 entitled "Device for protection of man against electrical shock from electric locomotive contact network, especially in pits and mines. This device is based on the principle of superimposing a high frequency current upon the current of the contact network. In this device, when the resistance of the contact network insulation is less than the resistance of the human body, a voltage is fed from the diagonal of measuring bridge to relay device [p.4, line 50-54]. The disadvantage of this device is that it is mainly used in pits and mines, and therefore, it has a limited number of possible devices to be connected to the network. In the present time, there are a great number of electrical devices connected to the network, and it is not a low probability that another electrical device or object can mislead said device for protection that it can perceive it as a human.

In another prior art document, namely, US Patent No 4,630,161 entitled "Protection technique for exposed conductor", a technique is disclosed for protecting against electrocution or shock resulting from contacting an exposed conductor which is connected to a power supply. Especially, we can draw attention to the sensing circuit. Said sensing circuit may passively monitor an electrical characteristics such as capacitance, or may actively monitor by supplying a signal such as a medium or high frequency signal of low amplitude, and measuring changes in the signal. Said circuit interrupts electricity when human body is contacting. The working principle of this technique is based on the difference between the capacitance of a part of a body and that of the contacting device [p.9, lines 28-30]. Also, the leakage current were being used to distinguish the existence of body contact [p.9, lines 30-35]. The disadvantage of this technique is that in a detailed electrical network and with a wide range of electrical devices to be connected to the network, the capacitance changes or leakage currents may not give a true information of human contact.

Thus, there is a need for a more advanced and smart system which is able to sense the human contact, and able to detect simultaneously the difference between the plug-in or removal of an electrical device into or from the network, and the human contact to the conductor line and short circuit.

### SUMMARY OF INVENTION

Accordingly, as a primary object of the present invention, a smart control system for detecting plug-in or removal of electrical devices, detecting short circuit, sensing human contact to the conductor line and protecting human from electrical shocks is provided. The smart control system according to the invention comprises microprocessor for analyzing the feedback from the circuits, controlling said circuits and switching element, switching circuit for cutting off the electricity, device detector and short-circuit detecting circuit, when main electric is off, device removal and short-circuit detecting circuit, when main electric is on, short circuit detecting circuit, when main electric is off, human contact detecting circuit, when main electric is on, safety circuit for protecting the smart control system, characterized in that said switching circuit comprises a transistor and a switching element, said device detector and short-circuit detecting circuit comprises four resistors and four transistors, said device removal and short-circuit detecting circuit comprises a coil and an AC-DC converter including a diode bridge and a capacitor, said short circuit detecting circuit, when main electric is off, comprises an optocoupler element, said human contact detecting circuit, when main electric is on, comprises a diode, two capacitors, an AC-DC converter including a diode bridge and a capacitor, and a frequency generator, said safety circuit comprises a transistor and a switching element.

### BRIEF DESCRIPTION OF DRAWINGS

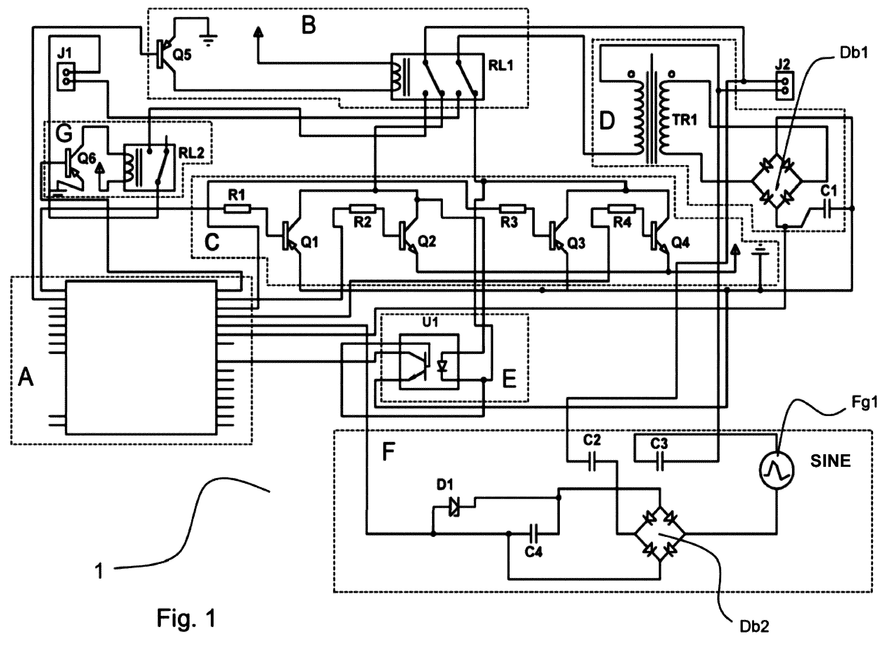

Fig. 1 depicts a single line-single device embodiment of the electronic circuit of the smart control system according to the present invention,
Fig. 2 is a flowchart of operating a smart control system according to the present invention for a single line-single device embodiment,
Fig. 3a is a schematic view of the single line-single device embodiment of a smart control system according to the present invention,
Fig. 3b is a schematic view of the single line-multiple devices embodiment of a smart control system according to the present invention,
Fig. 3c is a schematic view of the multiple lines-single device embodiment of a smart control system according to the present invention,
Fig. 3d is a schematic view of the multiple lines-multiple devices embodiment of a smart control system according to the present invention.

### DESCRIPTION OF EMBODIMENTS

Reference is made to Fig. A. With the present invention, a smart control system (1) for detecting plug-in or removal of electrical devices, detecting short circuit, sensing human contact to the conductor line and protecting human from electrical shocks is provided. The smart control system (1) according to the invention comprises microprocessor (A) for analyzing the feedback from the circuits, controlling said circuits and switching element (B), switching circuit (B) for cutting off the electricity, device detector and short-circuit detecting circuit (C), when main electric is off, device removal and short-circuit detecting circuit (D), when main electric is on, short circuit detecting circuit (E), when main electric is off, human contact detecting circuit (F), when main electric is on, safety circuit (G) for protecting the smart control system, characterized in that said switching circuit (B) comprises a transistor (Q5) and a switching element (RL1), said device detector and short-circuit detecting circuit (C) comprises four resistors (R1, R2, R3 and R4) and four transistors (Q1, Q2, Q3, Q4), said device removal and short-circuit detecting circuit (D) comprises a coil (TR1) and an AC-DC converter including a diode bridge (Db1) and a capacitor (C1), said short circuit detecting circuit (E), when main electric is off, comprises an optocoupler element (U1), said human contact detecting circuit (F), when main electric is on, comprises a diode (D1), two capacitors (C2, C3), an AC-DC converter including a diode bridge (Db2) and a capacitor (C4), and a frequency generator (Fg1), said safety circuit (G) comprises a transistor (Q6) and a switching element (RL2).

In accordance with the present invention, said switching elements (RL1) and (RL2) are selected from triacs, relays and contactors.

### Types of Smart Control System

There are 2 types of smart control system (1) according to the invention.

### A) Household type, B) Industrial type

A) Household type: It is divided into 2 types: 1) Single line, 2) Multiple lines. These are also divided into 2 groups. Single line with single device (d1). Single line with multiple devices (d1, d2, d3, , dn). Multiple lines with single device (d1). Multiple lines with multiple devices (d1, d2, d3,).
B) Industrial type: It is divided into 2 types: 1) Single line, 2) Multiple lines. These are also divided into 2 groups. Single line with single device (d1). Single line with multiple devices (d1, d2, d3, , dn). Multiple lines with single device (d1). Multiple lines with multiple devices (d1, d2, d3,).

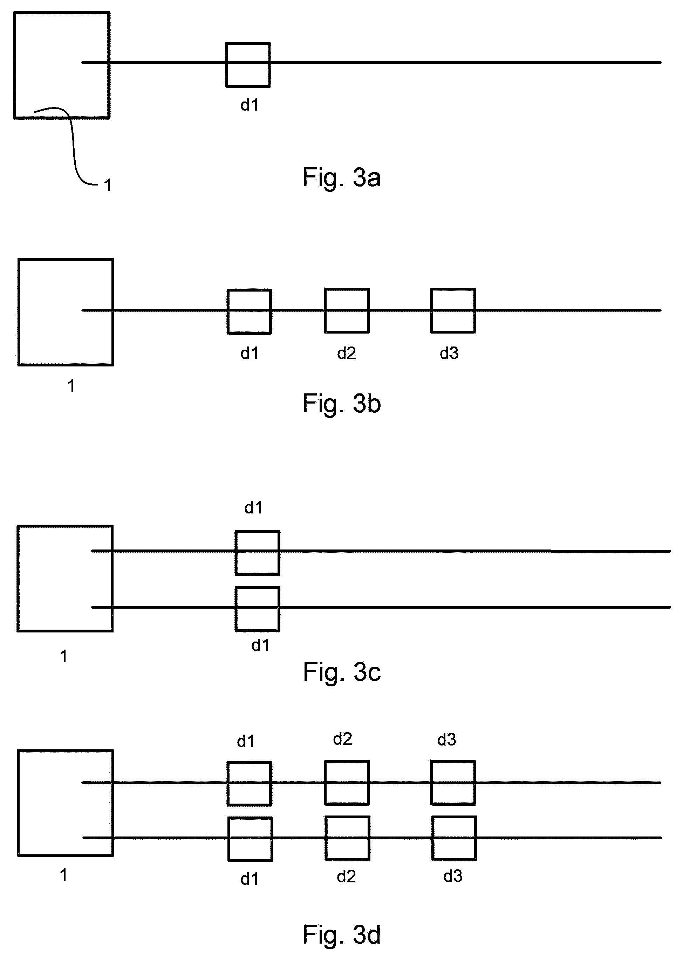

Reference is made to Fig. 3a, 3b, 3c and 3d, which is a schematic view of the different types of application of the smart control system (1) of the invention.

Single Line-Single Device: As seen in Fig. 3a, there is one smart control system (1) unit and one conductor line connected to it. In this arrangement, there is only one device (d1) on the conductor line. In this way, at the beginning, the main electric is off, Circuit C operates and if Circuit C detects that there is a device connected to the conductor line, then it sends command to Microprocessor A to turn on the electricity. With this arrangement, , the smart control system (1) controls only one conductor line and one device.

Single Line-Multiple Devices: As seen in Fig. 3b, there is one smart control system (1) of the invention and one conductor line connected to it. In this arrangement, multiple devices (d1, d2, d3, , dn) can be connected to the conductor line. Therefore, the smart control system (1) controls one conductor line and multiple devices. In this arrangement, there is always electrical power on the conductor line, therefore there is no need for Circuit C to be used. Only if short-circuit or human contact is detected, the electricity is cut off.

Multiple Lines-Single Device: As seen in Fig. 3c, there is one smart control system (1) of the invention and multiple conductor lines connected to it. In this arrangement, on every conductor line, there is only one device (d1). Therefore, the smart control system (1) controls only one device on every conductor line. In this way, at the beginning, the main electric is off, Circuit C operates and if Circuit C detects that there is a device connected to the conductor line, then it sends command to Microprocessor A to turn on the electricity.

Multiple Lines-Multiple Devices: As seen in Fig. 3d, there is one smart control system (1) of the invention and multiple conductor lines connected to it. In this arrangement, on every conductor line, there are multiple devices (d1, d2, d3, , dn). Therefore, the smart control system(1) controls multiple devices on every conductor line. In this arrangement, there is always electrical power on the conductor lines, therefore there is no need for Circuit C to be used. Only if short-circuit or human contact is detected, the electricity is cut off only on the relevant conductor line.

Household type and industrial type only differ from each other to be single-phase and three-phase. Electronic technique is the same, only, in case of three-phase, the relay or contactor will be 3-phase. And circuit C is set to be 3-phase, i.e. the number of outputs is increased. All the techniques applied afterwards are same, therefore it will be just enough to describe the single phase arrangement in the following description and the appended figures.

### MAIN CIRCUIT PARTS FOR SINGLE DEVICE ON A CONDUCTOR LINE

A-Microprocessor
B-Switching circuit (Relay, contactor)
C-Device detector and short-circuit detecting circuit, when main electric is off (shortly Circuit C)
D-Device removal and short-circuit detecting circuit, when main electric is on (shortly Circuit D)
E-Short circuit detecting circuit, when main electric is off (shortly Circuit E)
F-Human contact detecting circuit, when main electric is on (shortly Circuit F)
G-Safety circuit for protecting the smart control system (shortly Circuit G)

### MAIN CIRCUIT PARTS FOR MULTIPLE DEVICES ON A CONDUCTOR LINE

A-Microprocessor
B-Switching circuit (Relay, contactor)
C-Circuit C does not exist. Since at the beginning, microprocessor A gives always electricity to the conductor line, there is no need for Circuit C
D-Device removal and short-circuit detecting circuit, when main electric is on (shortly Circuit D). Circuit D also detects if another device is added to the conductor line. According to the total number of conductor lines connected to the smart control system, the number of Circuit D is increased as equal to the number of conductor lines in the final electrical circuit.
E-Short circuit detecting circuit, when main electric is off (shortly Circuit E)
F-Human contact detecting circuit, when main electric is on (shortly Circuit F)
G-Safety circuit for protecting the smart control system (shortly Circuit G)

### SHORT DESCRIPTION OF MAIN CIRCUIT PARTS

### A-Microprocessor

A wide range of microprocessors on the market can be used in this smart control system (1). And different programming languages may be used to implement the system. We preferably used the Mega 8 or 32 chip from Atmel Company. As programming language, we used AVR Code Vision or AVR Bascom. For the present smart control system (1), any chip which has ADC port can be used.

### B-Switching circuit (Relay, contactor)

This switching relay implements switching function for Circuit C and F. When Circuit C is on, Circuit F and main electricity is off. When Circuit F is on, Circuit C is off and main electricity is on. For switching purposes, below the current value of 30A, relay is used. Said relay may be biphase or three-phase. Above the current value of 30A, preferably a contactor is used. If desired, instead of relay or contactor, any switching element that is capable of taking this current may be used. According to the total number of conductor lines connected to the smart control system (1), the number of switching circuit B is increased as equal to the number of conductor lines in the final electrical circuit.

### C-Device detector and short-circuit detecting circuit, when main electric is off (shortly Circuit C) [FOR SINGLE DEVICE ON A CONDUCTOR LINE]

If a device is connected to the conductor line when the main electricity is off, Circuit C understands that there is an electrical device connected instead of a human contact, then it sends a signal to the microprocessor A to open the switching element (RL1). Thus the device connected to the conductor line begins to receive electricity.

### C-Device detector and short-circuit detecting circuit, when main electric is off (shortly Circuit C) [FOR MULTIPLE DEVICES ON A CONDUCTOR LINE]

In this type, at the beginning, there will be always electricity on the conductor line. Therefore, Circuit C is not present.

### D-Device removal and short-circuit detecting circuit, when main electric is on (shortly Circuit D) [FOR SINGLE DEVICE ON A CONDUCTOR LINE]

When the main electricity is on, Circuit D detects when the device is removed from the conductor line or switched off, then it sends a signal to the microprocessor A to shut the switching element (RL1), and returns control back to the Circuit C. Also, when the main electricity is on, Circuit D detects when there is short-circuit, then it sends a signal to the microprocessor A to shut the switching element (RL1) and returns control back to the Circuit C.

### D-Device removal and short-circuit detecting circuit, when main electric is on (shortly Circuit D) [FOR MULTIPLE DEVICES ON A CONDUCTOR LINE]

When Circuit D is used with the arrangement type of multiple devices on a conductor line, it detects when an additional device is added to the conductor line, when main electric is on. According to the total number of conductor lines connected to the smart control system (1), the number of Circuit D is increased as equal to the number of conductor lines in the final electrical circuit.

### E-Short circuit detecting circuit, when main electric is off (shortly Circuit E) [FOR SINGLE DEVICE ON A CONDUCTOR LINE]

When the main electric is off, Circuit E detects if there is short circuit, and then sends a signal to the microprocessor A not to open switching element (RL1). If Circuit C gives a command to open and if Circuit E gives a command not to open the switching element (RL1), then the result is that switching element (RL1) is not opened. In order to open the switching element (RL1) and thus to allow the electricity to flow, both Circuit C and Circuit E should send a command to the microprocessor A to open switching element (RL1) at the same time. In conclusion, when main electric is off, if there is not a short circuit and there exists a device connected to the conductor line, then smart control system (1) gives electrical current to the conductor line.

### E-Short circuit detecting circuit, when main electric is off (shortly Circuit E) [FOR MULTIPLE DEVICES ON A CONDUCTOR LINE]

Smart control system (1) always give electricity to the system at the beginning in case of multiple devices on a conductor line. Therefore, in this mode, there is no need for Circuit E.

### F-Human contact detecting circuit, when main electric is on (shortly Circuit F)

When the main electric is on, a reference signal of 10 MHz sine is superimposed on the main electricity, and Circuit F detects if a human contact to the conductor line occurs by analyzing the voltage decrease characteristic of returning reference signal, it sends a signal to the microprocessor A to shut the switching element (RL1) and prevent a possible electrical shock of human subject, then returns control back to the Circuit C.

### G-Safety circuit for protecting the smart control system (shortly Circuit G)

Especially when there is a problem with the Circuit F, namely shock protection system, and when the microprocessor A does not operate properly, this safety Circuit G is activated and completely cuts off the main electricity. Thus, in every possible occasion, human is protected from electrical shocks.

### LIST OF ELECTRONIC COMPONENTS USED

microprocessor A= AT Mega32,
R1, R2, R3, R4, R10, R11 = resistor = 1K,
Q1, Q3= NPN transistor,
Q2, Q4 = PNP transistor,
R5, R6, R7, R8, R9, R12 = resistor = 10K,
Q5, Q6 = PNP transistor =BC547,
U1 = optocoupler = PC817,
RL1 =relay 12V, 2 contacts
TR1= a special coil: In the first winding, 0.047 mm copper wire is wound on a E shaped coil metal of 2 cm width as preferably 300 turns, and 15 windings of copper wire of 1mm is wound on this. For the industrial type, the outer copper wire is 6 mm in width, and the width of the E shaped coil metal is 6 cm. And the inner winding is made of copper wire of 0.17 mm, preferably of 800 turns.

For the industrial type, one coil corresponds to each phase, thus there are 3 coils in three-phase industrial type. For the household type, there is 1 coil corresponding to mono-phase.

The main electricity and the reference pulse is conveyed through the outer winding of 1 mm thick and an inductive voltage is created in the winding of copper wire of 0.17 mm and thus created voltage is passed through AC-DC converter, converted to DC and transmitted to microprocessor A.
D1=diode
C1=capacitor= 4.7 mF, 50 V
C2, C3=capacitor = 103, 2kV
C4= 100 mF, 50 V
Fg1= high frequency generator = sine wave generator = 10 MHz, 20 VPP
RL2= 12V, 1 contactor relay
J1=input 220 V, 50-60 Hz
J2=output 220 V, 50-60 Hz

### DETAILED EXPLANATION FOR MAIN CIRCUIT PARTS

### C-Device detector and short-circuit detecting circuit, when main electric is off (shortly Circuit C)

Microprocessor A, transmits received voltage of 50 V DC by opening and closing the transistors in Circuit C towards output (J2) with the same frequency. With PNP and NPN transistors, preferably with the TIP type transistors, this pulse is transmitted to the output (J2) as positive-negative for 20 milliseconds, as negative-positive for 20 milliseconds.

1kHz pulse is transmitted to positive for 20 milliseconds, then transmitted to negative for 20 milliseconds. In this way, when there is a device on the conductor line, this voltage sent will be turn back from the device and a voltage is formed on the coil in Circuit C. Then this voltage is converted to DC by AC-DC converter, then transmitted to microprocessor A. With the software installed in the microprocessor A, 10 Bit ADC (Analog-Digital Converter) is read ( 5V is divided by 1024).

When there is a device connected, voltage reading has a value between 50 and 1024. When the voltage at the coil is between 0.244 and 5.000 volt, then the microprocessor A decides that a device is connected to the conductor line.

With this type of reading, human contact gives a value smaller than 50.

The benefits of changing the voltage polarity as plus-minus, then minus-plus at the output pins are as follows:
1) When some devices are plugged in, actual phase and neutral may be different, then this can prevent the true detection of the presence of the device. To reverse the plug of the device may solve the problem. However, this is an improper solution. Instead, to avoid this problem, we automatically change the polarity of the pulse as positive-negative, then negative-positive alternatingly. Even these type of devices are plugged in reversely, Circuit C may truly detect the presence of the device connected.
2) Some non-standard devices, such as some saving lamps, capacitors of the chargers will not discharge. When these types of devices are unplugged and if they are plugged in again after a time less than natural discharge time of the capacitor, since the capacitor is not discharged, the circuit can not detect the presence of the device. However, this problem is solved by the technique of changing the voltage polarity as positive-negative, negative-positive alternatingly. Thus, the charged capacitor is discharged, so the device is again detectable by the circuit.

In case of a short circuit, maximum voltage falls to the coil, namely 5V, then the circuit also detects it as a device mistakenly. So the presence of a device and a short circuit can not be distinguished. To solve this problem, an additional circuit, named Circuit E is designed.

E-Short circuit detecting circuit, when main electric is off (shortly Circuit E)

When the pulse from Circuit C arrives at the optic part of optocoupler element (U1), namely optical LED, the opposite part sends this information to the microprocessor A. In case of short circuit, the optical LED inside the optocoupler element (U1) doesn't work, so the opposite part can not inform the microprocessor A. When microprocessor A doesn't receive that information, it decides that there is short circuit.

### D-Device removal and short-circuit detecting circuit, when main electric is on (shortly Circuit D)

When main electric is on, if there is short circuit, and the current reached a level just 10mA below the maximum current of the device and fuse, the electricity is cut off by a fast switch, preferably a triac. In this way, the electric current is cut off before the fuse is activated, thus an electrical problem does not occur inside the device, so the smart control system (1) itself acts also as a smart fuse.

Circuit D detected a short circuit and cut off the electricity, after a certain period of time from the moment of electric cut off, the smart control system (1) can turn on the electricity, or can wait for a person to come and turn on the electricity, or it can periodically detect if a short circuit is present while there is still no electricity on the conductor line and it turns on the electricity when a short circuit has ended.

### F-Human contact detecting circuit, when main electric is on (shortly Circuit F)

A sine wave of 10 MHz, 20 V PP (peak to peak) was generated in Circuit F and sent by superimposing on main electricity. The feedback of this wave is received by Circuit F and a report is sent by a special arrangement inside Circuit F to the microprocessor A. This report is in the form of a voltage data between 0 and 5.

This voltage information comes to microprocessor A, and it is read by a software inside the microprocessor A as 10-bit ADC (Analog-to-Digital Converter) (5V is divided by 1024). Circuit C detects the presence of a device and turns on the electricity, then 1024 calculation system associated with Circuit F estimates a value between 0 and 800.

First, microprocessor A records the voltage value when a device is connected to the conductor line, and then, when a human contacted to the conductor line, the voltage value obtained will be increased or decreased by 5. Then microprocessor A decides that a human contact is occurred.

Circuit C detected a human contact and cut off the electricity, after a certain period of time from the moment of electric cut off, the smart control system (1) can turn on the electricity, or can wait for a person to come and turn on the electricity, or it can periodically detect if a human contact is present while there is still no electricity on the conductor line and it turns on the electricity when a human contact has ended.

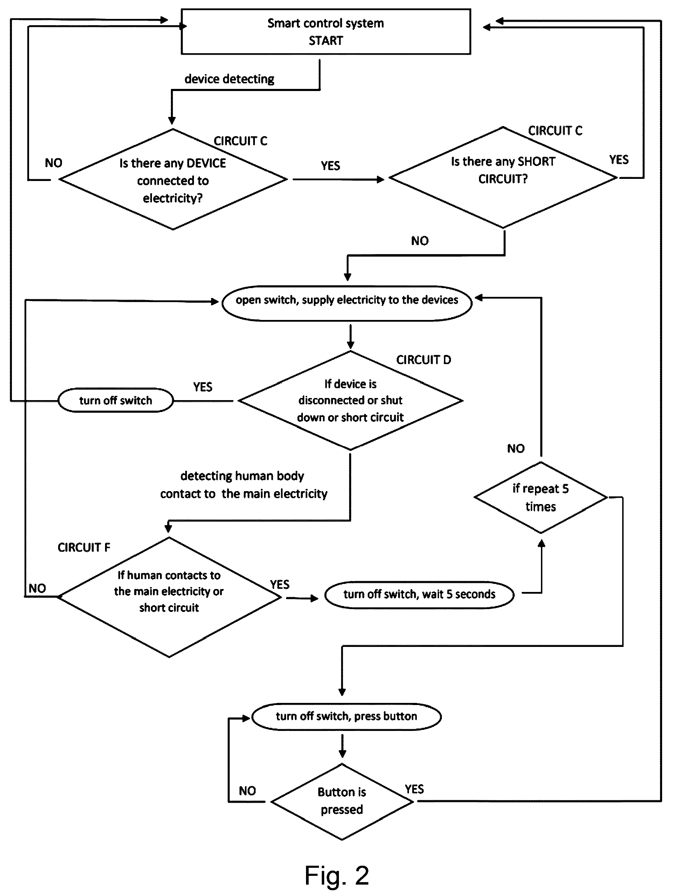

Reference is made to Fig. 2, which is a flowchart of operating a smart control system (1) according to the present invention. This flowchart represents the operating algorithm of single line-single device type of arrangement. Smart control system (1) checks if there is any device connected to electricity, then it checks if there is any short circuit. If there is short circuit, then the control returns to the beginning, otherwise smart control system (1) opens the switching element (RL1) and supply electricity to the network. In this single line-single device type of arrangement, if the device is disconnected or shut down or there is short circuit, then the smart control system (1) closes the switching element (RL1) and the control returns to the beginning, otherwise the control passes to the human contact detecting. If a human contact to the conductor line is detected, then, in order to prevent electrical shock, smart control system (1) closes the switching element (RL1) and waits for 5 seconds, then opens the switching element (RL1) and if again detects a human contact, then it closes the switching element (RL1) again, this loop works for 5 times until it detects no human contact.

If human contact continues after 5 consecutive trials, then the smart control system (1) closes the system until a person comes and presses a button directly.

Furthermore, according to another preffered embodiment of the invention, the smart control system (1) also comprises a filter unit which blocks unwanted noise and harmonics coming from external sources to the input of the smart control system and also blocks the reflections of the generated wave inside the smart control system used for detecting the human contact. Said filter unit also prevents the generated wave for detecting the human contact to be directed to the input, thus it enables the generated wave to travel in one direction towards the output.

### Reference Signs List

- A: Microprocessor
- B: Switching circuit (Relay, contactor)
- C: Device detector and short-circuit detecting circuit, when main electric is off (shortly Circuit C)
- D: Device removal and short-circuit detecting circuit, when main electric is on (shortly Circuit D)
- E: Short circuit detecting circuit, when main electric is off (shortly Circuit E)
- F: Human contact detecting circuit, when main electric is on (shortly Circuit F)
- G: Safety circuit for protecting the smart control system (shortly Circuit G)
- J1: Input
- J2: Output
- R1, R2, R3, R4: Resistors
- Q1, Q2, Q3, Q4, Q5, Q6: Transistors
- RL1, RL2: Switching elements
- C1, C2, C3, C4, C5: Capacitors
- D1: Diode
- Db1, Db2: Diode bridges
- TR1: Coil
- U1: Optocoupler
- Fg1: Frequency generator

## Claims

1. A smart control system (1) for detecting plug-in or removal of electrical devices, detecting short circuit, sensing human contact to the conductor line and protecting human from electrical shocks, comprising
- microprocessor (A) for analyzing the feedback from the circuits, controlling said circuits and switching circuit (B),
- switching circuit (B) for cutting off the electricity,
- device detector and short-circuit detecting circuit (C), when main electric is off,
- device removal and short-circuit detecting circuit (D), when main electric is on,
- short circuit detecting circuit (E), when main electric is off,
- human contact detecting circuit (F), when main electric is on,
- safety circuit (G) for protecting the smart control system (1),
**characterized in that**
said switching circuit (B) comprises a transistor (Q5) and a switching element (RL1),
said device detector and short-circuit detecting circuit (C) comprises four resistors (R1, R2, R3 and R4) and four transistors (Q1, Q2, Q3, Q4),
said device removal and short-circuit detecting circuit (D) comprises a coil (TR1) and an AC-DC converter including a diode bridge (Db1) and a capacitor (C1),
said short circuit detecting circuit (E), when main electric is off, comprises an optocoupler element (U1),
said human contact detecting circuit (F), when main electric is on, comprises a diode (D1), two capacitors (C2, C3), an AC-DC converter including a diode bridge (Db2) and a capacitor (C4), and a frequency generator (Fg1),
said safety circuit (G) comprises a transistor (Q6) and a switching element (RL2).

2. A smart control system (1) according to Claim 1, **characterized in that** said switching elements (RL1) and (RL2) are selected from triacs, relays and contactors.
